# EUROPÄISCHE PATENTANMELDUNG

(11) **EP 4 782 722 A1**
(43) Veröffentlichungstag der Anmeldung: **29.07.2026**
(21) Anmeldenummer: 26153917.5
(22) Anmeldetag: 23.01.2026
(51) Int. Cl.: F16H 49/00

(54) **SPANNUNGSWELLENGETRIEBE**

(30) Priorität: 24.01.2025 LU 509796
(71) Anmelder: Ovalo GmbH, 65555 Limburg (DE)
(72) Erfinder: Wolf, Alexander, 35794 Mengerskirchen (DE)
(74) Vertreter: Hoffmann, Jürgen

(57) **Zusammenfassung**

Die Erfindung betrifft ein Spannungswellengetriebe mit einem topfförmig oder hutförmig ausgebildeten Flexspline. Das Spannungswellengetriebe ist gekennzeichnet durch eine Differenzdrehwinkelmessvorrichtung, die einen Differenzdrehwinkel zwischen zwei voneinander beabstandeten Abschnitten, nämlich einem ersten Abschnitt und einem zweiten Abschnitt, des Flexsplines ermittelt oder ein von dem Differenzdrehwinkel abhängiges, insbesondere proportionales, Differenzdrehwinkelsignal erzeugt.

## Beschreibung

Die Erfindung betrifft ein Spannungswellengetriebe mit einem topfförmig oder hutförmig ausgebildeten Flexspline.

Die Erfindung betrifft außerdem ein Verfahren zum Betreiben eines Spannungswellengetriebes.

Ein Spannungswellengetriebe besitzt zumeist ein starres, ringförmiges, innenverzahntes Zahnrad, das als Circularspline bezeichnet wird, und ein flexibles außenverzahntes Zahnrad, das im Inneren des starren innenverzahnten Zahnrads angeordnet ist und das als Flexspline bezeichnet wird, auf. Der Circularspline und der Flexspline weisen eine unterschiedliche Zahl von Zähnen auf. Der Flexspline kann in Form eines Flextopfes ausgebildet sein, der eine flexible Hülse aufweist, wobei an einem Ende der Hülse ein Boden und am anderen Ende der Hülse die Außenverzahnung angeordnet sind. Der Boden weist zumeist einen Befestigungsflansch auf, an den beispielsweise ein Gegenflansch einer Abtriebswelle angekoppelt sein kann. Ein Spannungswellengetriebe mit einem Flexspline in Form eines Flextopfes ist beispielsweise aus US 6 050 155 A bekannt.

Ein Flexspline in Hutbauweise weist anstelle des Bodens ausgehend von der Hülse einen radial nach außen gerichteten Kragen auf. Der Kragen weist zumeist an einem radial außen liegenden Rand einen Befestigungsflansch auf, an den beispielsweise ein Gegenflansch einer Abtriebswelle angekoppelt sein kann. Aus DE 11 2011 105 253 T5 und aus DE 11 2013 004 710 T5 sind Spannungswellengetriebe vom Zylinderhuttyp bekannt, bei denen der Flexspline eine Hutform aufweist.

Der Wellengenerator verformt den Flexspline zu einer ovalen, insbesondere elliptischen, Form und bringt so die Außenverzahnung des Flexsplines mit der Innenverzahnung des Circularsplines an jedem Ende der Ellipsen-Hauptachse miteinander in Eingriff.

Es gibt auch Spannungswellengetriebe in Ringbauweise, bei denen der Flexspline als Ring ausgebildet ist und weder einen Boden noch einen Kragen aufweist. Diese Spannungswellengetriebe weisen ein weiteres starres, ringförmiges, innenverzahntes Zahnrad auf, das als Dynamicspline bezeichnet wird. Der Dynamicspline steht ebenfalls mit dem Flexspline in Zahneingriff. Der Dynamicspline und der Circularspline weisen eine unterschiedliche Zahl von Zähnen auf.

Bei einigen Anwendungen ist es erforderlich, das abtriebsseitige Drehmoment zu berücksichtigen. Bei Robotern ist es vorteilhaft, das von einem Getriebe übertragene Drehmoment möglichst genau messen zu können, beispielsweise um einen Roboterarm während des Betriebs präzise Steuern zu können. Dies ist beispielsweise relevant, wenn der Roboter Bewegungen in unterschiedlichen Geschwindigkeiten und mit unterschiedlichen Lasten auszuführen hat.

Aus EP 4 257 848 A1 ist ein Getriebesystem bekannt, das ein Drehmomentabstützelement und ein Dreiwellengetriebe aufweist, welches ein ringförmiges Zahnrad hat. Das Zahnrad ist als Flansch ausgebildet und mittels eines elastisch verformbaren Koppelbauteils, das einen mit dem Flansch drehfest verbundenen Gegenflansch aufweist, an dem Drehmomentabstützelement festgelegt. Das Getriebesystem weist einen Messaufnehmer auf, der dazu ausgebildet und angeordnet ist ein Drehmoment zu erfassen und ein elektrisches Messsignal zu erzeugen.

Aus DE 10 2019 112 146 B3 ist eine Vorrichtung zum Messen eines Drehmoments eines Spannungswellengetriebes bekannt. Die Vorrichtung umfasst ein Bauteil, auf welches das einwirkt, eine auf dem Bauteil angeordnete Drehmoment elektrisch isolierende Isolationsschicht und eine auf der Isolationsschicht angeordnete verformungssensitive Messschicht. Weiterhin betrifft die Erfindung ein Spannungswellengetriebe für einen Roboterarm mit einer derartigen Vorrichtung zum Messen eines Drehmoments.

Aus DE 10 2020 107 674 B3 ist eine Spannungswellengetriebeeinrichtung, umfassend ein Spannungswellengetriebe mit einem eine erste Verzahnung aufweisenden Circular Spline, einem eine zweite Verzahnung aufweisenden Flexspline und einem Wellengenerator mit einem Wave-Generator-Lager zum Auslenken des Flexsplines in radialer Richtung bekannt. Die Spannungswellengetriebeeinrichtung weist ein gegenüber dem Flexspline und/oder dem Circular Spline räumlich feststehendes Bauteil auf, wobei eine Maßverkörperung an einem der Zahnräder oder dem Wellengenerator angeordnet ist und am räumlich feststehenden Bauteil wenigstens ein Sensor vorgesehen ist, welcher dazu ausgebildet ist, die Maßverkörperung kontaktlos zu erfassen.

Aus der deutschen Offenlegungsschrift DE 10 2022 206 333 A1 ist ein Sensor bekannt, der einen Basisabschnitt, mehrere erste Widerstandsleitungen und mehrere zweite Widerstandsleitungen aufweist. Der Basisabschnitt erstreckt sich in einer Richtung, die die Mittelachse kreuzt. Die mehreren ersten Widerstandsleitungen sind in Umfangsrichtung an einer Vorderseitenfläche des Basisabschnitts aufgereiht. Die mehreren zweiten Widerstandsleitungen sind an der Vorderseitenfläche des Basisabschnitts konzentrisch zu den mehreren ersten Widerstandsleitungen und in Umfangsrichtung zwischen den ersten Widerstandsleitungen angeordnet. Bei den ersten Widerstandsleitungen beträgt die Anzahl der Widerstandsleitungsbereiche entlang der Umfangsrichtung eins oder weniger und die Anzahl der Widerstandsleitungsbereiche in Radialrichtung beträgt eins oder weniger. Aus dieser Offenlegungsschrift ist außerdem eine Antriebskraftübertragungsvorrichtung bekannt, bei der das biegsame Element einen sich rohrförmig in Axialrichtung erstreckenden rohrförmigen Abschnitt, mehrere Außenzähne, die an der in Radialrichtung äußeren Fläche des rohrförmigen Abschnitts bereitgestellt sind, und einen Membranabschnitt aufweist, der sich von einem axialen Endabschnitt des rohrförmigen Abschnitts in Radialrichtung nach außen oder in Radialrichtung nach innen erstreckt, wobei der Basisabschnitt auf einer Vorderseitenfläche des Membranabschnitts angeordnet ist.

Allerdings haben die aus dem Stand der Technik bekannten Spannungswellengetriebe den Nachteil, dass deren Funktion und/oder Einsetzbarkeit durch die Drehmomentmessvorrichtung nicht unerheblich beeinträchtigt wird und/oder dass sie in Herstellung und Betrieb sehr aufwändig sind.

Es ist daher die Aufgabe der vorliegenden Erfindung, ein Spannungswellengetriebe anzugeben, das einfacher herstellbar ist und eine präzise Drehmomentmessung ermöglicht.

Die Aufgabe wird durch ein Spannungswellengetriebe gelöst, das gekennzeichnet ist durch eine Differenzdrehwinkelmessvorrichtung, die einen Differenzdrehwinkel zwischen zwei voneinander beabstandeten Abschnitten, nämlich einem ersten Abschnitt und einem zweiten Abschnitt, des Flexsplines ermittelt oder ein von dem Differenzdrehwinkel abhängiges, insbesondere proportionales, Differenzdrehwinkelsignal erzeugt.

In erfindungsgemäßer Weise wurde erkannt, dass eine präzise Ermittlung des auf den Flexspline einwirkenden Drehmomentes während des Betriebes des Spannungswellengetriebes möglich ist, indem ein durch die im Betrieb des Spannungswellengetriebes auftretende Torsion des Flexsplines verursachter Differenzdrehwinkel zweier voneinander beabstandeter Abschnitte des Flexsplines direkt oder indirekt ermittelt wird. Die Messung erfolgt, während der Flexspline um seine Rotationsachse rotiert, wobei die Differenzdrehwinkelmessvorrichtung in vorteilhafter Weise derart ausgebildet sein kann, dass die Funktion des Spannungswellengetriebes und insbesondere die Funktion des Flexspline allenfalls sehr geringfügig oder sogar gar nicht beeinträchtigt wird.

Der Flexspline eines Spannungswellengetriebes unterliegt im Betrieb einer elastischen Torsionsverformung, deren Größe innerhalb des vorgesehenen Betriebsbereichs proportional zu dem auf den Flexspline wirkenden Drehmoment ist. Diese Torsionsverformung äußert sich in einem Relativverdrehwinkel zwischen zwei axial beabstandeten Bereichen des Flexsplines.

Der Differenzdrehwinkel ist der Winkel, um den der erste Abschnitt des Flexsplines in einer zur Rotationsachse ersten Ebene relativ zum zweiten Abschnitt in einer zur Rotationsachse zweiten Ebene unter Betriebsbelastung gegenüber dem unbelasteten Zustand verdreht ist. Der Differenzdrehwinkel ist proportional zur Torsionsverformung des Flexsplines und die Torsionsverformung ist ihrerseits proportional zu dem Drehmoment, das auf den Flexspline einwirkt.

Der erfindungsgemäß ermittelte Differenzdrehwinkel stellt eine unmittelbare Maßgröße für die im Betrieb auftretende Torsionsverformung des Flexsplines dar. Da die Torsionsverformung des Flexsplines innerhalb des elastischen Betriebsbereichs in bekannter Weise proportional zum auf den Flexspline wirkenden Drehmoment ist, ermöglicht die Differenzdrehwinkelmessung eine direkte, kontinuierliche und präzise Drehmomentbestimmung.

Bei einer vorteilhaften Ausführung erfasst die Differenzdrehwinkelmessvorrichtung den Differenzdrehwinkel durch eine unmittelbare Erfassung an den beiden Abschnitten. Es ist alternativ auch möglich, dass das relative Bewegungsverhalten wenigstens eines der Abschnitte indirekt erfasst wird, indem die Differenzdrehwinkelmessvorrichtung das Bewegungsverhalten eines mit dem betreffenden Abschnitt drehfest verbundenen starren Bauteils erfasst.

Bei dem Bauteil kann es sich beispielsweise um eine Abtriebswelle oder den Circularspline handeln. Insbesondere ist es möglich, dass die Differenzdrehwinkelmessvorrichtung den Differenzdrehwinkel erfasst, indem sie den Differenzdrehwinkel zwischen einem mit einem der Abschnitte drehfest verbundenen, insbesondere hutförmigen, Übertragungsbauteil und dem anderen Abschnitt erfasst. Vorzugsweise weist das Übertragungsbauteil keine Innenverzahnung auf, die mit den Zähnen des Flexsplines in Eingriff stehen, wobei dies jedoch nicht ausgeschlossen ist.

Bei einer Ausführung, die eine besonders präzise Messung ermöglich, ist der erste Abschnitt axial von dem zweiten Abschnitt beabstandet. Insbesondere kann vorteilhaft vorgesehen sein, dass der axiale Abstand des ersten Abschnitts von dem zweiten Abschnitt größer ist als das 0,7-Fache der axialen Länge des Flexsplines. Auf diese Weise kann vorteilhaft ein großer Anteil der axialen Länge des Flexsplines für die Messung verwendet werden, was eine besonders genaue Messung ermöglicht. Ein größerer axialer Abstand zwischen den Messabschnitten sorgt dafür, dass kleine Verformungen über eine längere Strecke deutlicher erfassbar sind, was die Präzision der Drehmomentmessung steigert. Der große Abstand der Abschnitte ist auch vorteilhaft für die Empfindlichkeit der Differenzdrehwinkelmessvorrichtung, wodurch selbst geringe Drehmomentänderungen präzise erfasst werden können.

Alternativ oder zusätzlich kann vorteilhaft vorgesehen sein, dass der axiale Abstand des ersten Abschnitts von dem Kragen beziehungsweise den Boden des Flexsplines kleiner ist als das 0,25-Fache der axialen Länge des Flexsplines und/oder dass der axiale Abstand des ersten Abschnitts von der Verzahnung des Flexsplines kleiner ist als das 0,25-Fache der axialen Länge des Flexsplines. Durch die Nähe zu den Zonen der Drehmomenteinleitung und Drehmomentausleitung wird vorteilhaft erreicht, dass die erfasste Drehwinkeldifferenz die tatsächliche Drehmomentbelastungen des Flexsplines präzise widerspiegelt, wodurch Messabweichungen minimiert und eine zuverlässige Drehmomentbestimmung ermöglicht wird.

Alternativ oder zusätzlich kann vorgesehen sein, dass der erste Abschnitt radial von dem zweiten Abschnitt beabstandet ist. Beispielsweise kann es sich bei den Abschnitten um radial beabstandete Abschnitte des Kragens bzw. des Bodens handeln. Es kann beispielsweise auch vorgesehen sein, dass der erste Abschnitt ein radial außen liegender Randbereich (insbesondere ein Flansch) des Kragens des Flexsplines ist, während der zweite Abschnitt ein axial von dem Kragen beabstandeter ringförmiger Abschnitt der flexiblen Hülse des Flexsplines ist. Es kann alternativ beispielsweise auch vorgesehen sein, dass der erste Abschnitt ein radial innen liegender Bereich des Bodens des Flexsplines ist, während der zweite Abschnitt ein axial von dem Boden beabstandeter ringförmiger Abschnitt der flexiblen Hülse des Flexsplines ist.

Insbesondere können der erste Abschnitt und/oder der zweite Abschnitt ringförmig ausgebildet sein.

Ganz allgemein können der erste Abschnitt und der zweite Abschnitt, insbesondere ringförmige, Abschnitte der flexiblen Hülse des Flexsplines sein. Alternativ können der erste Abschnitt und der zweite Abschnitt, insbesondere ringförmige, Abschnitte des Kragens bzw. des Bodens des Flexsplines sein. Es ist alternativ auch möglich, dass der erste Abschnitt ein Teil des Kragens oder des Bodens ist, während der zweite Abschnitt Teil der flexiblen Hülse des Flexsplines ist.

Die Differenzdrehwinkelmessvorrichtung kann beispielsweise dazu ausgebildet sein, den Differenzdrehwinkel durch Messung einer zu dem Differenzdrehwinkel proportionalen Größe zu erfassen, beispielsweise durch Erfassung einer relativen Positionsveränderung von Referenzpunkten der beiden Abschnitte in Umfangsrichtung. Ganz allgemein kann die Erfassung des Differenzdrehwinkels wenigstens eine indirekte Drehwinkelmessung beinhalten, bei der ein von der Drehbewegung abhängiger Weg ermittelt wird.

Bei einer vorteilhaften Ausführung weist die Differenzdrehwinkelmessvorrichtung ein erstes Sensorelement, das direkt oder indirekt drehfest mit dem ersten Abschnitt verbunden ist, und ein zweites Sensorelement, das direkt oder indirekt drehfest mit dem zweiten Abschnitt verbunden ist, auf. Die direkte oder indirekte drehfeste Verbindung der Sensorelemente mit den jeweiligen Abschnitten des Flexsplines gewährleistet eine genaue Messung der relativen Verdrehung. Die Sensorelemente sind derart ausgebildet, dass deren Drehwinkel und damit der Drehwinkel des jeweiligen Abschnitts bezogen auf die Rotationsachse, vorzugsweise berührungslos, erfasst werden kann.

Die beiden Sensorelemente können beispielsweise Bestandteile von zwei voneinander separaten Drehwinkelmessvorrichtungen sein oder sie können miteinander in Wirkverbindung stehende Bestandteile eines (vorzugsweise einzigen) Differenzdrehwinkelmesssensors sein.

Bei einer vorteilhaften Ausführung weist die Differenzdrehwinkelmessvorrichtung zwei voneinander separate Drehwinkelmessvorrichtungen auf, wobei das erste Sensorelement Bestandteil einer ersten Drehwinkelmessvorrichtung ist und dass das zweite Sensorelement Bestandteil einer zweiten Drehwinkelmessvorrichtung ist. Hierbei kann vorteilhaft vorgesehen sein, dass die erste Drehwinkelmessvorrichtung einen ersten Drehwinkelsensor aufweist, der die Position und/oder Drehstellung des ersten Sensorelements detektiert, und/oder dass die zweite Drehwinkelmessvorrichtung einen zweiten Drehwinkelsensor aufweist, der die Position und/oder Drehstellung des zweiten Sensorelements detektiert. Vorzugsweise detektiert der erste Drehwinkelsensor die Position und/oder Drehstellung des ersten Sensorelements berührungslos, insbesondere optisch oder magnetisch. Alternativ oder zusätzlich kann vorgesehen sein, dass der zweite Drehwinkelsensor die Position und/oder Drehstellung des ersten Sensorelements berührungslos, insbesondere optisch oder magnetisch, detektiert.

Bei einer berührungslosen Detektion sind keine mechanischen Kontakte erforderlich, so dass keine Abriebeffekte oder mechanische Abnutzung entstehen, was die Lebensdauer der Drehwinkelmessvorrichtungen Sensoren erheblich verlängert. Außerdem sind berührungslos arbeitende Drehwinkelmessvorrichtungen weniger anfällig für Umwelteinflüsse wie Schmutz oder Vibrationen.

Bei einer besonderen Ausführung weist das erste Sensorelement wenigstens einen Magneten auf oder ist als Magnet ausgebildet. Bei einer solchen Ausführung kann der erste Drehwinkelsensor eine Spule oder einen Hallsensor oder einen magnetoresistiven Sensor aufweisen, um die Position und/oder Drehstellung des ersten Sensorelements berührungslos zu erfassen. Analog kann (alternativ oder zusätzlich) das zweite Sensorelement wenigstens einen Magneten aufweisen oder als Magnet ausgebildet sein. Bei einer solchen Ausführung kann der zweite Drehwinkelsensor eine Spule oder einen Hallsensor oder einen magnetoresistiven Sensor aufweisen, um die Position und/oder Drehstellung des zweiten Sensorelements berührungslos zu erfassen.

Bei einer vorteilhaften Ausführung weist die Differenzdrehwinkelmessvorrichtung eine Elektronik auf, die Messwerte der beiden Drehwinkelmessvorrichtungen empfängt und den Differenzdrehwinkel errechnet oder das von dem Differenzdrehwinkel abhängige, insbesondere proportionale, Differenzdrehwinkelsignal erzeugt.

Wie bereits erwähnt ist es auch möglich, dass das erste Sensorelement und das zweite Sensorelement miteinander in Wirkverbindung stehende Bestandteile desselben (und insbesondere einzigen) Differenzdrehwinkelmesssensors sind.

Beispielsweise können das erste Sensorelement und das zweite Sensorelement hierbei elektrostatisch, magnetisch und/oder elektromagnetisch miteinander in Wirkverbindung stehen. Insbesondere kann vorteilhaft vorgesehen sein, dass das erste Sensorelement und das zweite Sensorelement induktiv miteinander in Wirkverbindung stehen.

Bei einer vorteilhaften Ausführung weist der Differenzdrehwinkelmesssensor einen Drehkondensator auf, dessen Kondensatorplatten durch das erste Sensorelement und das zweite Sensorelement gebildet sind. Bei dieser Ausführung wird der Drehkondensator zur Messung des Differenzdrehwinkels eingesetzt, indem die Änderung der Kapazität zwischen den Kondensatorplatten als Maß für den Differenzdrehwinkel ausgenutzt wird. Wenn sich die beiden Abschnitte (und somit die Sensorelemente) relativ zueinander drehen, verändert sich die Ausrichtung der Kondensatorplatten. Diese Drehbewegung führt zu einer Veränderung der Kapazität, da sich die relative Position der Kondensatorplatten ändert. Der Drehkondensator misst also die Änderung der Kapazität als Funktion des Differenzdrehwinkels. Die Kapazitätsänderung ist sehr empfindlich gegenüber kleinsten Veränderungen der Plattenausrichtung, was eine sehr genaue Messung des Differenzdrehwinkels ermöglicht. Eine fortlaufende und besonders präzise Messung der Kapazität kann durch den Einsatz einer elektrischen und/oder elektronischen Kapazitätsmessschaltungen erfolgen. Diese sind in der Lage, selbst kleinste Änderungen der Kapazität genau zu erfassen.

Bei einer anderen vorteilhaften Ausführung weist der Differenzdrehwinkelmesssensor eine Spule und einen Tauchkern, der bei zunehmender Verdrehung der Abschnitte in die Spule eintaucht oder aus der Spule austaucht auf. Hierbei ist das erste Sensorelement als Spule und das zweite Sensorelement als Tauchkern ausgebildet. Beispielsweise kann die Spule in einen elektrischen Schaltkreis eingebunden sein, der dazu ausgebildet ist, die Induktivität des Systems Spule-Tauchkern zu messen. Eine zunehmende Tiefe des Eintauchens des Tauchkerns führt zu einer höheren Induktivität, während ein Austauchen zu einer verringerten Induktivität führt. Eine Änderung des Differenzdrehwinkels der beiden Abschnitte führt daher zu einer Induktivitätsänderung. Eine fortlaufende und besonders präzise Messung der Induktivität kann durch den Einsatz einer elektrischen und/oder elektronischen Induktivitätsmessschaltung erfolgen. Die Induktivität kann sehr fein und exakt gemessen werden, was eine präzise Erfassung des Differenzdrehwinkels ermöglicht, auch bei kleinen Relativbewegungen der Abschnitte. Die Spule kann beispielsweise über Schleifkontakte und Schleifringe angeschlossen und in eine Induktivitätsmessschaltung eingebunden sein. Auf diese Weise ist es ermöglicht, dass die Spule mit dem Flexspline rotieren kann, während die Elektronik der Induktivitätsmessschaltung, beispielsweise relativ zu einem Getriebegehäuse des Spannungswellengetriebes, ortsfest bleiben kann.

Ganz allgemein kann der Differenzdrehwinkelmesssensor als Variometer ausgebildet sein, wobei unter einem Variometer ein Instrument verstanden wird, das Änderungen in Induktivität, Kapazität oder Widerstand erfasst, die mit der Relativposition und/oder Relativbewegung der Sensorelemente in Verbindung stehen.

Das Spannungswellengetriebe weist vorzugsweise eine Auswerteelektronik auf, die aus dem Differenzdrehwinkel oder dem Differenzdrehwinkelsignal das auf den Flexspline einwirkende Drehmoment ermittelt.

Die Auswerteelektronik kann vorteilhaft dazu eingerichtet sein, ausgehend von dem gemessenen Differenzdrehwinkel bzw. dem entsprechenden Differenzdrehwinkelsignal mittels einer hinterlegten Kennlinie oder eines bekannten mathematischen Zusammenhangs auf das auf den Flexspline wirkende Drehmoment zu schließen.

Bei einer ganz besonders vorteilhaften Ausführung ist eine Sperrvorrichtung vorhanden, die wahlweise in eine Freigabestellung, in der eine Welle relativ zu einem Getriebegehäuse rotierbar ist, oder in eine Blockierstellung, in der die Sperrvorrichtung eine Rotation der Welle relativ zu dem Getriebegehäuse blockiert, schaltbar ist. Die Sperrvorrichtung kann beispielsweise einen, insbesondere in Radialrichtung linear verschiebbaren, Sperrstift aufweisen, dessen freies Ende in der Blockierstellung in eine Ausnehmung der Welle oder in eine Ausnehmung eines mit der Welle drehfest verbundenen Bauteils eingreift. Insbesondere kann vorteilhaft vorgesehen sein, dass die Auswerteelektronik die Sperrvorrichtung automatisch in die Blockierstellung schaltet, wenn ein vorgegebener Grenzwert des auf den Flexspline einwirkenden Drehmomentes überschritten wird, beispielsweise um das Spannungswellengetriebe vor einer Überbelastung und/oder einem drohenden Versagen zu schützen.

Das Spannungswellengetriebe kann vorteilhaft ein Mittel zum Verändern der Vorspannung des Spannungswellengetriebes aufweisen. Hierzu kann der Wellengenerator relativ zu dem Flexspline stufenlos oder in Stufen axial verstellbar angeordnet sein. Insbesondere kann vorteilhaft vorgesehen sein, dass die Auswerteelektronik die Vorspannung des Spannungswellengetriebes automatisch verändert, wenn ein vorgegebener Grenzwert des Drehmomentes überschritten oder unterschritten wird, beispielsweise um das Spannungswellengetriebe vor einer Überbelastung und/oder einem drohenden Versagen zu schützen. Insbesondere kann vorteilhaft vorgesehen sein, dass die Auswerteelektronik die Vorspannung des Spannungswellengetriebes automatisch erhöht, wenn die Drehmomentbelastung zunimmt, um ein Überratschen der miteinander in Eingriff stehenden Verzahnungen von Flexspline und Circularspline zu verhindern.

Bei einer besonders vorteilhaften Ausführung ist die Auswerteelektronik in dem Spannungswellengetriebe, insbesondere in einem Gehäuse des Spannungswellengetriebes, angeordnet. Bei einer solchen Ausführung ist die Auswerteelektronik besonders gut vor äußeren Einflüssen, insbesondere vor Verschmutzung und/oder Beschädigung geschützt. Außerdem kann das Spannungswellengetriebe als sehr kompakte integrierte Funktionseinheit ausgebildet werden, die nicht nur eine Getriebefunktion bereitstellt, sondern ohne zusätzliche Bauteile auch einen Drehmomentmesswert ausgeben kann.

Alternativ oder zusätzlich kann vorteilhaft vorgesehen sein, dass die gesamte Differenzdrehwinkelmessvorrichtung in dem Spannungswellengetriebe, insbesondere in einem Gehäuse des Spannungswellengetriebes, angeordnet ist. Das Gehäuse des Spannungswellengetriebes bietet der Differenzdrehwinkelmessvorrichtung Schutz vor Verschmutzung, Feuchtigkeit und anderen Umwelteinflüssen, die die Funktionalität der Differenzdrehwinkelmessvorrichtung beeinträchtigen könnten. Bei einer solchen Ausführung ist gewährleistet, dass die Differenzdrehwinkelmessvorrichtung und vorzugsweise auch die zugehörige Elektronik dauerhaft zuverlässig arbeiten.

Bei einer ganz besonders vorteilhaften Ausführung kann das gesamte Spannungswellengetriebe als fertig montierte und funktionsfähige Baueinheit an ein anzutreibendes System ankoppelt werden, ohne hierfür Teile des Spannungswellengetriebes demontieren zu müssen. Alternativ oder zusätzlich kann das Spannungswellengetriebe vorteilhaft derart ausgebildet sein, dass es an eine drehmomenteinspeisende Antriebsvorrichtung ankoppelt werden kann, ohne hierfür Teile des Spannungswellengetriebes demontieren zu müssen. Insbesondere kann vorteilhaft vorgesehen sein, dass das gesamte Spannungswellengetriebe und/oder ein gesamter Aktuator, der ein solches Spannungswellengetriebe aufweist, als fertig montierte und funktionsfähige Baueinheit an ein mittels des Aktuators anzutreibendes System, das eine Antriebswelle aufweist, ankoppelbar ist, wobei eine drehstarre Verbindung eines Spannungswellengetriebe-Abtriebselements (beispielsweise des Flexsplines) mit der Antriebswelle des anzutreibenden Systems herstellbar ist, ohne hierfür Teile des Spannungswellengetriebes bzw. des Aktuators demontieren zu müssen, insbesondere ohne hierfür im Kraftfluss vom Antriebsmotor zum Spannungswellengetriebe-Abtriebselement liegende Teile demontieren zu müssen. Eine solche drehstarre, insbesondere koaxiale, Verbindung des Spannungswellengetriebe-Abtriebselements mit der Antriebswelle des anzutreibenden Systems ist beispielsweise mittels einer Steckverzahnung oder mittels einer zentralen Befestigungsschraube, die durch das Spannungswellengetriebe (und/oder den Antriebsmotor) hindurch verläuft und das Spannungswellengetriebe-Abtriebselement mit der Antriebswelle des anzutreibenden Systems verbindet, herstellbar.

Das erfindungsgemäße Spannungswellengetriebe und der erfindungsgemäße Aktuator haben den ganz besonderen Vorteil, dass sie als eigenständige, vom Hersteller fertig zusammengebaute und hinsichtlich einer ordnungsgemäßen Funktionsfähigkeit getestete Baueinheit vom Verwender mit einem anzutreibenden System gekoppelt werden können. Insbesondere ist es vorteilhaft nicht notwendig, das Spannungswellengetriebe bzw. den Aktuator für das Ankoppeln an ein anzutreibendes System zu zerlegen, was zum einen den Montagevorgang an sich vereinfacht und darüber hinaus gewährleistet, dass das Spannungswellengetriebe bzw. der Aktuator in dem Zustand zum Einsatz kommt, in dem er hinsichtlich seiner Funktionsfähigkeit, insbesondere unmittelbar nach seiner Herstellung, getestet wurde.

Ganz besonders vorteilhaft ist ein Aktuator, der ein erfindungsgemäßes Spannungswellengetriebe sowie eine drehmomenteinspeisende Antriebsvorrichtung aufweist, die an das Spannungswellengetriebe angekoppelt ist. Die drehmomenteinspeisende Antriebsvorrichtung kann vorteilhaft insbesondere ein, insbesondere elektrischer, Antriebsmotor sein.

Von ganz besonderem Vorteil ist ein Roboter, insbesondere ein Industrieroboter, der wenigstens ein erfindungsgemäßes Getriebesystem oder einen erfindungsgemäßen Aktuator mit einem solchen Getriebesystem beinhaltet.

Insbesondere kann das erfindungsgemäße Getriebesystem in einem Robotergelenk eingesetzt werden. Durch die Verwendung des erfindungsgemäßen Getriebesystems bzw. des erfindungsgemäßen Aktuators kann die Zuverlässigkeit des Roboters erhöht und die Ausfallzeit verringert werden.

Von besonderem Vorteil ist insbesondere eine Fahrzeugkomponente, beispielsweise ein aktives Fahrwerk oder eine Lenkung oder ein Nockenwellenversteller oder eine Stellvorrichtung zur Veränderung des Expansionshubes und/oder des Verdichtungsverhältnisses eines Verbrennungsmotors für ein Kraftfahrzeug, die wenigstens ein erfindungsgemäßes Getriebesystem oder einen erfindungsgemäßen Aktuator mit einem solchen Getriebesystem aufweist. Durch die Verwendung einer solchen Fahrzeugkomponente kann die Zuverlässigkeit und Sicherheit des Fahrzeuges erhöht werden. Außerdem ist es vorteilhaft möglich, längere Inspektions- und/oder Reparaturintervalle vorzusehen, was die Wirtschaftlichkeit des Fahrzeuges erhöht.

Von ganz besonderem Vorteil ist ein Fahrwerk, insbesondere ein aktives Fahrwerk für ein Kraftfahrzeug, das wenigstens ein erfindungsgemäßes Getriebesystem oder einen erfindungsgemäßen Aktuator mit einem solchen Getriebesystem aufweist. Durch die Verwendung des erfindungsgemäßen Getriebesystems bzw. des erfindungsgemäßen Aktuators kann die Zuverlässigkeit des Fahrwerks erhöht werden. Insbesondere können umfangreiche Reparaturarbeiten vermieden werden. Dies ist von besonderem Vorteil, weil eine Reparatur oder ein Austausch eines verschlissenen Getriebes bei einem Fahrwerk besonders aufwendig ist, da viele andere Bauteile für die Reparatur vorübergehend demontiert werden müssen.

Von ganz besonderem Vorteil ist eine Lenkung, insbesondere PKW-Lenkung oder LKW-Lenkung, die wenigstens ein erfindungsgemäßes Getriebesystem oder einen erfindungsgemäßen Aktuator mit einem solchen Getriebesystem aufweist. Die Lenkung kann insbesondere eine Servolenkung und/oder eine Überlagerungslenkung sein. Durch die Verwendung des erfindungsgemäßen Getriebesystems bzw. des erfindungsgemäßen Aktuators kann die Zuverlässigkeit der Lenkung erheblich erhöht werden. Insbesondere können umfangreiche Reparaturarbeiten vermieden werden. Dies ist von besonderem Vorteil, weil eine Reparatur oder ein Austausch eines verschlissenen Getriebes bei einer Lenkung besonders aufwendig ist, da viele andere Bauteile für die Reparatur vorübergehend demontiert werden müssen.

Ganz besonders vorteilhaft ist ganz allgemein ein Verfahren zum Betreiben eines Spannungswellengetriebes, bei dem ein Differenzdrehwinkel zwischen zwei voneinander beabstandeten Abschnitten, nämlich einem ersten Abschnitt und einem zweiten Abschnitt, des Flexsplines ermittelt wird oder ein von dem Differenzdrehwinkel abhängiges, insbesondere proportionales, Differenzdrehwinkelsignal erzeugt wird. Hierbei kann vorteilhaft vorgesehen sein, dass aus dem Differenzdrehwinkel oder dem Differenzdrehwinkelsignal das auf den Flexspline einwirkende Drehmoment ermittelt wird. Mit der Messung des Differenzdrehwinkels steht ein zum jeweils aktuellen Drehmoment proportionales Signal in Echtzeit zur Verfügung, was beispielsweise eine ständige Überwachung des Betriebszustands des Spannungswellengetriebes oder eines Systems in das das Spannungswellengetriebe eingebaut ist, ermöglicht. Dies bietet beispielsweise die Möglichkeit, Frühwarnsysteme für Überlastungen, Verschleiß oder Fehlerzustände zu implementieren, was die Wartungsintervalle optimieren und Ausfallzeiten reduzieren kann.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Spannungswellengetriebes in einer schematischen Querschnittsdarstellung,
- Fig. 2: eine perspektivische Darstellung des Flexsplines des ersten Ausführungsbeispiels zur Illustration des Messprinzips,
- Fig. 3: ein zweites Ausführungsbeispiel eines erfindungsgemäßen Spannungswellengetriebes in einer schematischen Querschnittsdarstellung,
- Fig. 4: ein drittes Ausführungsbeispiel eines erfindungsgemäßen Spannungswellengetriebes in einer schematischen Querschnittsdarstellung,
- Fig. 5: eine schematische Darstellung des als Drehkondensator ausgebildeten Differenzdrehwinkelmesssensor des dritten Ausführungsbeispiels eines erfindungsgemäßen Spannungswellengetriebes,
- Fig. 6: ein viertes Ausführungsbeispiel eines erfindungsgemäßen Spannungswellengetriebes in einer schematischen Querschnittsdarstellung, und
- Fig. 7: ein fünftes Ausführungsbeispiel eines erfindungsgemäßen Spannungswellengetriebes in einer schematischen Querschnittsdarstellung.

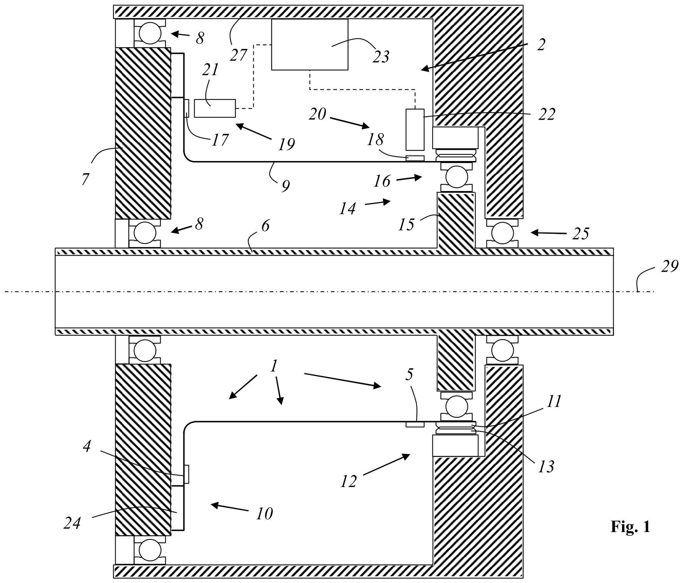

Die Figur 1 zeigt ein erstes Ausführungsbeispiel eines erfindungsgemäßen Spannungswellengetriebes in einer schematischen Querschnittsdarstellung. Das Spannungswellengetriebe weist einen hutförmig ausgebildeten Flexspline 1 und eine Differenzdrehwinkelmessvorrichtung 2 auf. Die Differenzdrehwinkelmessvorrichtung 2 ist dazu ausgebildet und angeordnet, einen Differenzdrehwinkel 3 zwischen zwei voneinander beabstandeten Abschnitten 4, 5, nämlich einem ersten Abschnitt 4 und einem zweiten Abschnitt 5, des Flexsplines 2 zu ermitteln oder ein von dem Differenzdrehwinkel 3 abhängiges, insbesondere proportionales, Differenzdrehwinkelsignal zu erzeugen.

Das Spannungswellengetriebe weist ein Getriebegehäuse 27 auf. Das Spannungswellengetriebe weist eine Spannungswellengetriebe-Antriebswelle 6 und eine Spannungswellengetriebe-Abtriebswelle 7 auf, wobei die Spannungswellengetriebe-Antriebswelle 6 dazu ausgebildet und bestimmt ist, mit einer Abtriebswelle einer (nicht dargestellten) drehmomenteinspeisenden Antriebsvorrichtung drehfest verbunden zu sein, und wobei die Spannungswellengetriebe-Abtriebswelle 7 dazu ausgebildet und bestimmt ist, mit einer (nicht dargestellten) als Hohlwelle ausgebildeten Antriebswelle eines anzutreibenden Systems drehfest verbunden zu werden.

Die Spannungswellengetriebe-Abtriebswelle 6 ist mittels zweier Abtriebswellen-Wälzlager 8 relativ zu dem Getriebegehäuse 27 und relativ zu der Spannungswellengetriebe-Antriebswelle 7 rotierbar gelagert.

Der hutförmige Flexspline 1 weist eine flexible Hülse 9 und einen radial nach außen gerichteten Kragen 10 mit einem Befestigungsflansch 24 sowie eine als Außenverzahnung 11 ausgebildete Verzahnung auf. Das Spannungswellengetriebe weist außerdem einen innenverzahnten Circularspline 12 auf, der drehfest mit dem Getriebegehäuse 27 verbunden ist. Die Außenverzahnung 11 des Flexsplines 1 steht, vorzugsweise an zwei einander gegenüberliegenden Stellen, mit der Innenverzahnung 13 des Circularsplines 12 in Eingriff.

Das Spannungswellengetriebe weist einen Wellengenerator 14 mit einem Antriebskern 15 und einem radialflexiblen Wälzlager 16 auf. Der Antriebskern 15 ist in diesem Ausführungsbeispiel gemeinsam einstückig mit der Spannungswellengetriebe-Antriebswelle 6 ausgebildet, was jedoch nicht zwingend erforderlich ist. Die Spannungswellengetriebe-Antriebswelle 6 ist mittels einen Wälzlagers 25 relativ zu dem Getriebegehäuse 27 rotierbar gelagert.

Die Differenzdrehwinkelmessvorrichtung 2 weist ein erstes Sensorelement 17 auf, das direkt drehfest mit dem ersten Abschnitt 4 des Flexsplines 1 verbunden ist. Die Differenzdrehwinkelmessvorrichtung 2 weist außerdem ein zweites Sensorelement 18 auf, das direkt drehfest mit dem zweiten Abschnitt 4 verbunden ist. Bei dieser Ausführung weisen das erste Sensorelement 17 und das zweite Sensorelement 18 jeweils wenigstens einen Magneten auf.

Die Differenzdrehwinkelmessvorrichtung 2 weist zwei voneinander separate Drehwinkelmessvorrichtungen 19, 20 auf, wobei das erste Sensorelement 17 Bestandteil der ersten Drehwinkelmessvorrichtung 19 ist und das zweite Sensorelement 18 Bestandteil der zweiten Drehwinkelmessvorrichtung 20 ist. Die erste Drehwinkelmessvorrichtung 19 weist einen ersten Drehwinkelsensor 21 auf, der die Drehstellung des ersten Sensorelements 17 berührungslos detektiert. Die zweite Drehwinkelmessvorrichtung 20 weist einen zweiten Drehwinkelsensor 22 auf, der die Drehstellung des zweiten Sensorelements 18 berührungslos detektiert.

Der erste Drehwinkelsensor 21 kann hierzu eine Spule oder einen Hallsensor oder einen magnetoresistiven Sensor aufweisen, um die Drehstellung des ersten Sensorelements 17 berührungslos zu erfassen. Analog kann auch der zweite Drehwinkelsensor 22 eine Spule oder einen Hallsensor oder einen magnetoresistiven Sensor aufweisen, um die Drehstellung des zweiten Sensorelements 18 berührungslos zu erfassen.

Die Differenzdrehwinkelmessvorrichtung weist eine an dem Getriebegehäuse 27 befestigte Auswerteelektronik 23 auf, die Messwerte der beiden Drehwinkelmessvorrichtungen 19, 20 über elektrische Kabel empfängt und den Differenzdrehwinkel 3 errechnet oder das von dem Differenzdrehwinkel 3 abhängige, insbesondere proportionale, Differenzdrehwinkelsignal erzeugt. Vorzugsweise ermittelt die Auswerteelektronik 23 aus dem Differenzdrehwinkel 3 das auf den Flexspline 1 aktuell einwirkende Drehmoment.

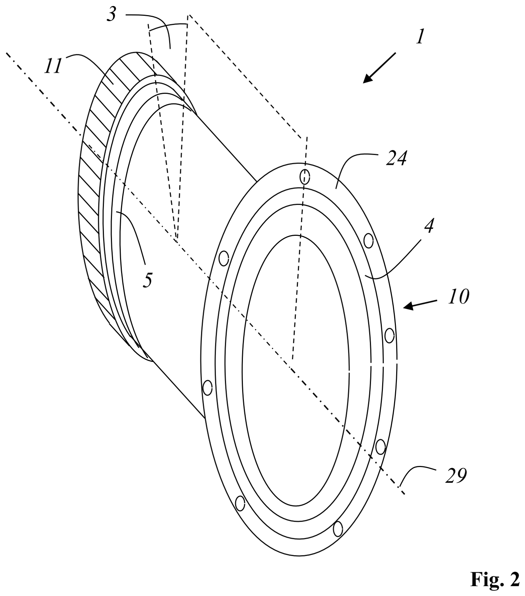

Die Figur 2 zeigt eine perspektivische Darstellung des Flexsplines 1 des ersten Ausführungsbeispiels zur Illustration des Messprinzips. Der Differenzdrehwinkel 3 ist der Winkel, um den der erste Abschnitt 4 des Flexsplines in einer zur Rotationsachse 29 ersten Ebene relativ zum zweiten Abschnitt in einer zur Rotationsachse 29 zweiten Ebene unter Betriebsbelastung gegenüber dem unbelasteten Zustand verdreht ist. Der Differenzdrehwinkel ist proportional zur Torsionsverformung des Flexsplines und die Torsionsverformung ist ihrerseits proportional zu dem Drehmoment, das auf den Flexspline einwirkt.

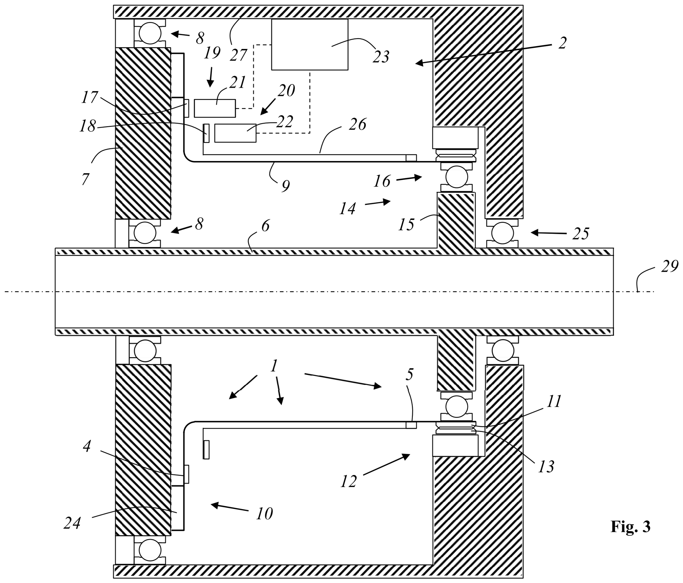

Die Figur 3 zeigt ein zweites Ausführungsbeispiel eines erfindungsgemäßen Spannungswellengetriebes in einer schematischen Querschnittsdarstellung. Im Unterschied zu dem in Figur 1 dargestellten Ausführungsbeispiel ist der zweite Abschnitt 5 über ein hutförmiges Übertragungsbauteil 26 indirekt mit dem zweiten Sensorelement 18 verbunden. Das hutförmige Übertragungsbauteil 26 dient dazu, die Relativdrehbewegung des zweiten Abschnitts 5 relativ zu dem ersten Abschnitt 4 mechanisch zu dem zweiten Sensorelement 18, welches in diesem Ausführungsbeispiel benachbart zu dem ersten Sensorelement 17 angeordnet ist, zu übertragen.

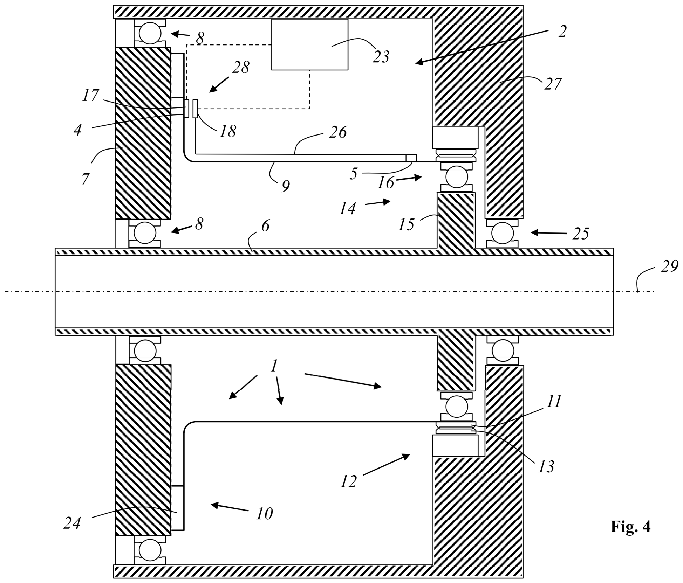

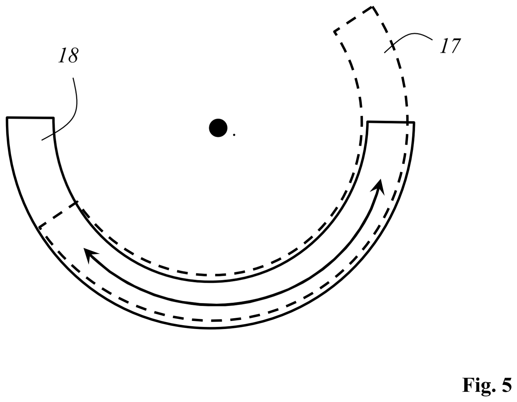

Die Figur 4 zeigt ein drittes Ausführungsbeispiel eines erfindungsgemäßen Spannungswellengetriebes in einer schematischen Querschnittsdarstellung. Im Unterschied zu dem in Figur 3 dargestellten Ausführungsbeispiel sind das erste Sensorelement 17 und das zweite Sensorelement 18 Bestandteile eines Differenzdrehwinkelmesssensors 28. Der Differenzdrehwinkelmesssensor 28 ist als Drehkondensator ausgebildet, dessen Kondensatorplatten durch das erste Sensorelement 17 und das zweite Sensorelement 18 gebildet sind, was in Figur 5 dargestellt ist. Bei dieser Ausführung wird der Drehkondensator zur Messung des Differenzdrehwinkels 3 eingesetzt, indem die Änderung der Kapazität zwischen den Kondensatorplatten als Maß für den Differenzdrehwinkel ausgenutzt wird. Wenn sich die beiden Abschnitte 4, 5 (und somit die Sensorelemente 17, 18) relativ zueinander drehen, verändert sich die Ausrichtung der Kondensatorplatten. Diese Drehbewegung führt zu einer Veränderung der Kapazität, da sich die relative Position der Kondensatorplatten ändert.

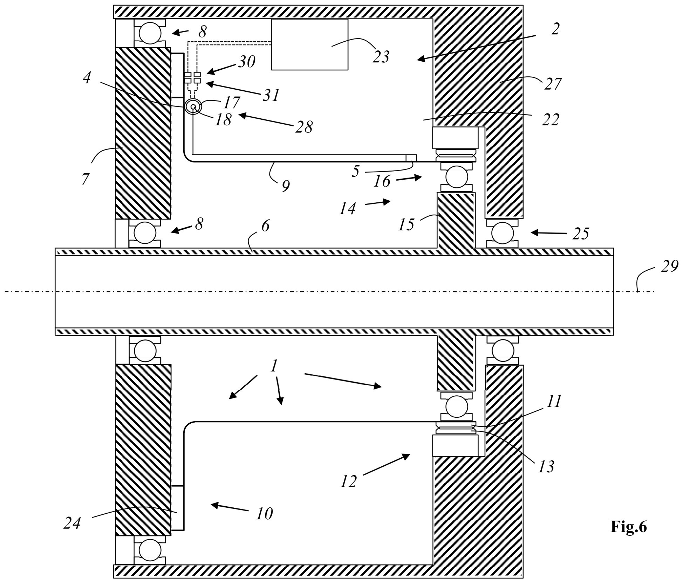

Die Figur 6 zeigt ein viertes Ausführungsbeispiel eines erfindungsgemäßen Spannungswellengetriebes in einer schematischen Querschnittsdarstellung. Im Unterschied zu dem in Figur 3 dargestellten Ausführungsbeispiel sind das erste Sensorelement 17 und das zweite Sensorelement 18 Bestandteile eines Differenzdrehwinkelmesssensors 28. Bei dieser Ausführung sind das erste Sensorelement 17 als Spule und das zweite Sensorelement 18 als Tauchkern ausgebildet. Die Spule ist in einen elektrischen Schaltkreis einer Auswerteelektronik 23 eingebunden, der dazu ausgebildet ist, die Induktivität des Systems Spule-Tauchkern zu messen.

Die Spule ist über Schleifkontakte 30 und Schleifringe 31 angeschlossen. Auf diese Weise ist es ermöglicht, dass die Spule mit dem Flexspline 1 rotieren kann, während die Auswerteelektronik 23 relativ zu dem Getriebegehäuse 27 des Spannungswellengetriebes ortsfest bleiben kann.

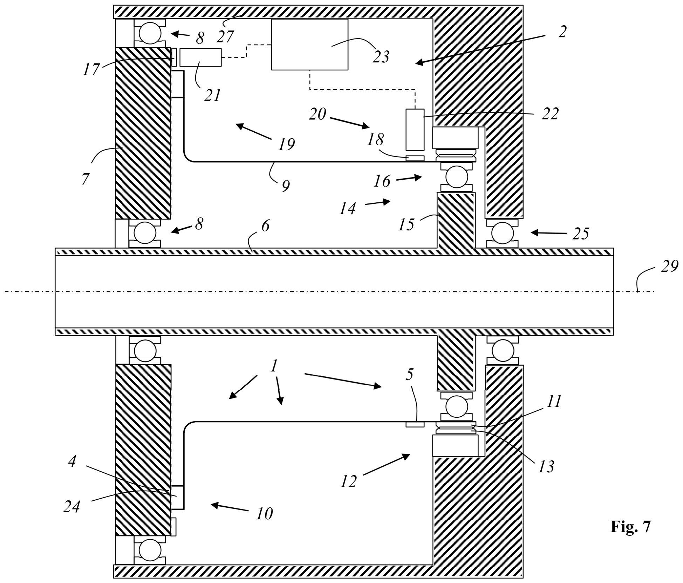

Die Figur 7 zeigt ein fünftes Ausführungsbeispiel eines erfindungsgemäßen Spannungswellengetriebes in einer schematischen Querschnittsdarstellung.

Das Spannungswellengetriebe weist einen hutförmig ausgebildeten Flexspline 1 und eine Differenzdrehwinkelmessvorrichtung 2 auf. Die Differenzdrehwinkelmessvorrichtung 2 ist dazu ausgebildet und angeordnet, einen Differenzdrehwinkel 3 zwischen zwei voneinander beabstandeten Abschnitten 4, 5, nämlich einem ersten Abschnitt 4 und einem zweiten Abschnitt 5, des Flexsplines 2 zu ermitteln oder ein von dem Differenzdrehwinkel 3 abhängiges, insbesondere proportionales, Differenzdrehwinkelsignal zu erzeugen.

Das Spannungswellengetriebe weist ein Getriebegehäuse 27 auf. Das Spannungswellengetriebe weist eine Spannungswellengetriebe-Antriebswelle 6 und eine Spannungswellengetriebe-Abtriebswelle 7 auf, wobei die Spannungswellengetriebe-Antriebswelle 6 dazu ausgebildet und bestimmt ist, mit einer Abtriebswelle einer (nicht dargestellten) drehmomenteinspeisenden Antriebsvorrichtung drehfest verbunden zu sein, und wobei die Spannungswellengetriebe-Abtriebswelle 7 dazu ausgebildet und bestimmt ist, mit einer (nicht dargestellten) als Hohlwelle ausgebildeten Antriebswelle eines anzutreibenden Systems drehfest verbunden zu werden.

Die Spannungswellengetriebe-Abtriebswelle 6 ist mittels zweier Abtriebswellen-Wälzlager 8 relativ zu dem Getriebegehäuse 27 und relativ zu der Spannungswellengetriebe-Antriebswelle 7 rotierbar gelagert.

Der hutförmige Flexspline 1 weist eine flexible Hülse 9 und einen radial nach außen gerichteten Kragen 10 mit einem Befestigungsflansch 24 sowie eine als Außenverzahnung 11 ausgebildete Verzahnung auf. Das Spannungswellengetriebe weist außerdem einen innenverzahnten Circularspline 12 auf, der drehfest mit dem Getriebegehäuse 27 verbunden ist. Die Außenverzahnung 11 des Flexsplines 1 steht, vorzugsweise an zwei einander gegenüberliegenden Stellen, mit der Innenverzahnung 13 des Circularsplines 12 in Eingriff.

Das Spannungswellengetriebe weist einen Wellengenerator 14 mit einem Antriebskern 15 und einem radialflexiblen Wälzlager 16 auf. Der Antriebskern 15 ist in diesem Ausführungsbeispiel gemeinsam einstückig mit der Spannungswellengetriebe-Antriebswelle 6 ausgebildet, was jedoch nicht zwingend erforderlich ist. Die Spannungswellengetriebe-Antriebswelle 6 ist mittels eines Wälzlagers 25 relativ zu dem Getriebegehäuse 27 rotierbar gelagert.

Bei diesem Ausführungsbeispiel ermittelt die Differenzdrehwinkelmessvorrichtung 2 den Differenzdrehwinkel 3 indirekt dadurch, dass sie den Differenzdrehwinkel 3 zwischen einem mit dem ersten Abschnitt 4 drehfest verbundenen Bauteil des Spannungswellengetriebes (nämlich der Spannungswellengetriebe-Abtriebswelle 7) und dem zweiten Abschnitt 5 erfasst.

Die Differenzdrehwinkelmessvorrichtung 2 weist hierzu ein erstes Sensorelement 17 auf, das direkt drehfest mit der Spannungswellengetriebe-Abtriebswelle 7 verbunden ist, welche ihrerseits drehfest mit dem ersten Abschnitt 4 verbunden ist. Die Differenzdrehwinkelmessvorrichtung 2 weist außerdem ein zweites Sensorelement 18 auf, das direkt drehfest mit dem zweiten Abschnitt 5 verbunden ist. Bei dieser Ausführung weisen das erste Sensorelement 17 und das zweite Sensorelement 18 jeweils wenigstens einen Magneten auf.

Die Differenzdrehwinkelmessvorrichtung 2 weist zwei voneinander separate Drehwinkelmessvorrichtungen 19, 20 auf, wobei das erste Sensorelement 17 Bestandteil der ersten Drehwinkelmessvorrichtung 19 ist und das zweite Sensorelement 18 Bestandteil der zweiten Drehwinkelmessvorrichtung 20 ist. Die erste Drehwinkelmessvorrichtung 19 weist einen ersten Drehwinkelsensor 21 auf, der die Drehstellung des ersten Sensorelements 17 berührungslos detektiert. Die zweite Drehwinkelmessvorrichtung 20 weist einen zweiten Drehwinkelsensor 22 auf, der die Drehstellung des zweiten Sensorelements 18 berührungslos detektiert.

Der erste Drehwinkelsensor 21 kann hierzu eine Spule oder einen Hallsensor oder einen magnetoresistiven Sensor aufweisen, um die Drehstellung des ersten Sensorelements 17 berührungslos zu erfassen. Analog kann auch der zweite Drehwinkelsensor 22 eine Spule oder einen Hallsensor oder einen magnetoresistiven Sensor aufweisen, um die Drehstellung des zweiten Sensorelements 18 berührungslos zu erfassen.

Die Differenzdrehwinkelmessvorrichtung weist eine an dem Getriebegehäuse 27 befestigte Auswerteelektronik 23 auf, die Messwerte der beiden Drehwinkelmessvorrichtungen 19, 20 über elektrische Kabel empfängt und den Differenzdrehwinkel 3 errechnet oder das von dem Differenzdrehwinkel 3 abhängige, insbesondere proportionale, Differenzdrehwinkelsignal erzeugt. Vorzugsweise ermittelt die Auswerteelektronik 23 aus dem Differenzdrehwinkel 3 das auf den Flexspline 1 aktuell einwirkende Drehmoment.

### Bezugszeichenliste:

- 1: Flexspline
- 2: Differenzdrehwinkelmessvorrichtung
- 3: Differenzdrehwinkel
- 4: erster Abschnitt
- 5: zweiter Abschnitt
- 6: Spannungswellengetriebe-Antriebswelle
- 7: Spannungswellengetriebe-Abtriebswelle
- 8: Abtriebswellen-Wälzlager
- 9: Hülse
- 10: Kragen
- 11: Außenverzahnung
- 12: Circularspline
- 13: Innenverzahnung
- 14: Wellengenerator
- 15: Antriebskern
- 16: radialflexibles Wälzlager
- 17: erstes Sensorelement
- 18: zweites Sensorelement
- 19: erste Drehwinkelmessvorrichtung
- 20: zweite Drehwinkelmessvorrichtung
- 21: erster Drehwinkelsensor
- 22: zweiter Drehwinkelsensor
- 23: Auswerteelektronik
- 24: Befestigungsflansch
- 25: Wälzlager
- 26: Übertragungsbauteil
- 27: Getriebegehäuse
- 28: Differenzdrehwinkelmesssensor
- 29: Rotationsachse
- 30: Schleifkontakte
- 31: Schleifringe

## Patentansprüche

1. Spannungswellengetriebe mit einem topfförmig oder hutförmig ausgebildeten Flexspline (1), **gekennzeichnet durch** eine Differenzdrehwinkelmessvorrichtung (2), die einen Differenzdrehwinkel (3) zwischen zwei voneinander beabstandeten Abschnitten (4, 5), nämlich einem ersten Abschnitt (4) und einem zweiten Abschnitt (5), des Flexsplines (1) ermittelt oder ein von dem Differenzdrehwinkel (3) abhängiges, insbesondere proportionales, Differenzdrehwinkelsignal erzeugt.

2. Spannungswellengetriebe nach Anspruch 1, **dadurch gekennzeichnet, dass**
a. die Differenzdrehwinkelmessvorrichtung (2) den Differenzdrehwinkel (3) dadurch ermittelt, dass sie den Differenzdrehwinkel (3) zwischen einem mit einem der Abschnitte (4, 5) drehfest verbundenen Bauteil des Spannungswellengetriebes und dem anderen Abschnitt erfasst, oder dass
b. die Differenzdrehwinkelmessvorrichtung (2) den Differenzdrehwinkel (3) dadurch ermittelt, dass sie den Differenzdrehwinkel (3) zwischen einem mit einem der Abschnitte (4, 5) drehfest verbundenen Übertragungsbauteil (26) und dem anderen Abschnitt erfasst.

3. Spannungswellengetriebe nach Anspruch 1 oder 2, **dadurch gekennzeichnet, dass** das Spannungswellengetriebe wenigstens eines der folgenden Merkmale a bis d aufweist:
a. der axiale Abstand des ersten Abschnitts (4) von dem zweiten Abschnitt (5) ist größer als das 0,7-Fache der axialen Länge des Flexsplines (1),
b. der axiale Abstand des ersten Abschnitts (4) von dem Kragen (10) beziehungsweise dem Boden des Flexsplines (1) ist kleiner als das 0,25-Fache der axialen Länge des Flexsplines (1),
c. der axiale Abstand des ersten Abschnitts (4) von der Flexsplineverzahnung des Flexsplines (1) ist kleiner als das 0,25-Fache der axialen Länge des Flexsplines (1),
d. der erste Abschnitt (4) ist wenigstens teilweise durch den Kragen (10) beziehungsweise den Boden des Flexsplines (1) gebildet.

4. Spannungswellengetriebe nach einem der Ansprüche 1 bis 3, **dadurch gekennzeichnet, dass** die Differenzdrehwinkelmessvorrichtung (2) ein erstes Sensorelement (17), das direkt oder indirekt drehfest mit dem ersten Abschnitt (4) verbunden ist, und ein zweites Sensorelement (18), das direkt oder indirekt drehfest mit dem zweiten Abschnitt (5) verbunden ist, aufweist.

5. Spannungswellengetriebe nach Anspruch 4, **dadurch gekennzeichnet, dass** die Differenzdrehwinkelmessvorrichtung (2) zwei Drehwinkelmessvorrichtungen (19, 20) aufweist, wobei das erste Sensorelement (17) Bestandteil einer ersten Drehwinkelmessvorrichtung (19) ist und dass das zweite Sensorelement (18) Bestandteil einer zweiten Drehwinkelmessvorrichtung (20) ist.

6. Spannungswellengetriebe nach Anspruch 5, **dadurch gekennzeichnet, dass**
a. die erste Drehwinkelmessvorrichtung (19) einen ersten Drehwinkelsensor (21) aufweist, der die Position und/oder Drehstellung des ersten Sensorelements (17), insbesondere berührungslos, detektiert, und/oder dass
b. die zweite Drehwinkelmessvorrichtung (20) einen zweiten Drehwinkelsensor (22) aufweist, der die Position und/oder Drehstellung des zweiten Sensorelements (18), insbesondere berührungslos, detektiert.

7. Spannungswellengetriebe nach einem der Ansprüche 5 oder 6, **dadurch gekennzeichnet, dass** das Spannungswellengetriebe wenigstens eines der folgenden Merkmale a bis d aufweist:
a. das erste Sensorelement (17) weist wenigstens einen Magneten auf oder ist als Magnet ausgebildet,
b. das zweite Sensorelement (18) weist wenigstens einen Magneten auf oder ist als Magnet ausgebildet,
c. der erste Drehwinkelsensor (21) weist eine Spule oder einen Hallsensor oder einen magnetoresistiven Sensor auf,
d. der zweite Drehwinkelsensor (22) weist eine Spule oder einen Hallsensor oder einen magnetoresistiven Sensor auf.

8. Spannungswellengetriebe nach einem der Ansprüche 5 bis 7, **dadurch gekennzeichnet, dass** die Differenzdrehwinkelmessvorrichtung (2) eine Elektronik aufweist, die Messwerte der Drehwinkelmessvorrichtungen (19, 20) empfängt und den Differenzdrehwinkel (3) errechnet oder das von dem Differenzdrehwinkel (3) abhängige, insbesondere proportionale, Differenzdrehwinkelsignal erzeugt.

9. Spannungswellengetriebe nach Anspruch 8, **dadurch gekennzeichnet, dass** das Spannungswellengetriebe wenigstens eines der folgenden Merkmale a bis f aufweist
a. das erste Sensorelement (17) und das zweite Sensorelement (18) sind miteinander in Wirkverbindung stehende Bestandteile eines Differenzdrehwinkelmesssensors (28),
b. das erste Sensorelement (17) und das zweite Sensorelement (18) stehen elektrostatisch, magnetisch und/oder elektromagnetisch miteinander in Wirkverbindung,
c. das erste Sensorelement (17) und das zweite Sensorelement (18) stehen induktiv miteinander in Wirkverbindung,
d. der Differenzdrehwinkelmesssensor (28) weist einen Drehkondensator mit Kondensatorplatten auf, die durch das erste Sensorelement (17) und das zweite Sensorelement (18) gebildet sind,
e. das erste Sensorelement (17) ist als Spule und das zweite Sensorelement (18) ist als Tauchkern ausgebildet,
f. der Differenzdrehwinkelmesssensor (28) ist als Variometer ausgebildet.

10. Spannungswellengetriebe nach einem der Ansprüche 1 bis 9, **gekennzeichnet durch**
a. eine Auswerteelektronik (23), die aus dem Differenzdrehwinkel (3) oder dem Differenzdrehwinkelsignal das auf den Flexspline (1) einwirkende Drehmoment ermittelt, und/oder durch
b. eine Auswerteelektronik (23), die eine Sperrvorrichtung des Spannungswellengetriebes automatisch in eine Blockierstellung schaltet, wenn ein vorgegebener Grenzwert des Drehmomentes überschritten wird, und/oder durch.
c. eine Auswerteelektronik (23), die in dem Spannungswellengetriebe, insbesondere in einem Gehäuse des Spannungswellengetriebes, angeordnet ist.

11. Spannungswellengetriebe nach einem der Ansprüche 1 bis 10, **dadurch gekennzeichnet, dass**
a. das Spannungswellengetriebe als fertig montierte und funktionsfähige Baueinheit an ein anzutreibendes System ankoppelbar ist, ohne hierfür Teile demontieren zu müssen, und/oder dass
b. das Spannungswellengetriebe an eine drehmomenteinspeisende Antriebsvorrichtung ankoppelbar ist, ohne hierfür Teile des Spannungswellengetriebes demontieren zu müssen.

12. Aktuator, der einen, insbesondere elektrischen, Antriebsmotor und ein dem Antriebsmotor triebtechnisch nachgeschaltetes Spannungswellengetriebe nach einem der Ansprüche 1 bis 11 aufweist.

13. Vorrichtung, ausgewählt aus einem Roboter, insbesondere Industrieroboter, einem Robotergelenk, einem Fahrwerk, insbesondere einem aktiven Fahrwerk für ein Kraftfahrzeug, sowie einer Lenkung, insbesondere einer PKW-Lenkung oder LKW-Lenkung, wobei die Vorrichtung wenigstens ein Spannungswellengetriebe nach einem der Ansprüche 1 bis 11 oder beinhaltend einen Aktuator nach Anspruch 12 aufweist.

14. Verfahren zum Betreiben eines Spannungswellengetriebes, insbesondere eines Spannungswellengetriebes nach einem der Ansprüche 1 bis 11, **dadurch gekennzeichnet, dass** ein Differenzdrehwinkel (3) zwischen zwei voneinander beabstandeten Abschnitten (4, 5), nämlich einem ersten Abschnitt (4) und einem zweiten Abschnitt (5), des Flexsplines (1) ermittelt wird oder ein von dem Differenzdrehwinkel (3) abhängiges, insbesondere proportionales, Differenzdrehwinkelsignal erzeugt wird.

15. Verfahren nach Anspruch 14, **dadurch gekennzeichnet, dass** aus dem Differenzdrehwinkel (3) oder dem Differenzdrehwinkelsignal das auf den Flexspline (1) einwirkende Drehmoment ermittelt wird.
